(19) **Europäisches Patentamt**

**European Patent Office**

**Office européen des brevets**

(11) **EP 1 258 456 A1**

(12) **EUROPEAN PATENT APPLICATION**

(43) Date of publication:
20.11.2002 Bulletin 2002/47

(51) Int Cl.[7]: **C01B 33/18**, C03B 8/02

(21) Application number: 01112262.9

(22) Date of filing: 18.05.2001

(84) Designated Contracting States:
**AT BE CH CY DE DK ES FI FR GB GR IE IT LI LU MC NL PT SE TR**
Designated Extension States:
**AL LT LV MK RO SI**

(71) Applicant: **Degussa AG**
**40474 Düsseldorf (DE)**

(72) Inventors:
• **Oswald, Monika**
**63454 Hanau (DE)**
• **Scheider, Gerrit**
**63456 Hanau (DE)**
• **Deller, Klaus**
**63512 Hainburg (DE)**

(54) **Silica glass formation process**

(57) In a forming a silica glass at low temperature, the fumed silica with the physical-chemical datas a) to f) is added to a hydrolyzed solution of a metal alcoxide. 0.2-5 mol of fumed silica with the physical-chemical da- tas a) to f) is added to 1 mol of metal alcoxide. Being uniformly dispersed, the solution is gelled and dried to be dry gel and then sintered to be non-porous.

EP 1 258 456 A1

## Description

TECHNICAL FIELD

This invention is related to a silica glass formation process, and more particularly to a silica glass formation process at a low temperature by the sol-gel technology using a metal alkoxide as raw material.

BACKGROUND ART

Silica glass has been recognized to be very advantageous to many uses, such as crucibles, boards and quartz tubes of furnaces in the manufacturing process of semiconductor, since it has been possible to prepare a silica glass of high purity. Besides, silica glass is used for a glass equipment such as a beaker for chemistry and a cell for optical measurement. Further, the development of the silica glass having less hydroxyl group or having good optical uniformity permits the various optical uses of silica glass. Especially, attention is given to silica glass fiber for optical communication.

Furthermore, silica glass is used for a substrate of a Thin Film Transistor. In this way, silica glass is widely applied in various fields and the demand thereof is expected to increase still more in future.

At present, silica glass is mainly obtained by the following three approaches.

Method (1) wherein; cleanly refined native quartz is washed and melt.

Method (2) wherein; $SiO_2$ is formed from raw material $SiCl_4$ or $SiH_4$ of high purity.

Method (3) wherein; a native silica sand is melt.

Whichever is used, however, prepared silica glass amounts to expensive due to the high temperature treatment which is inevitably included in the manufacturing process and the difficulty in manufacturing glasses its own.

Accordingly, more economical process is eagerly desired for preparing silica glass. In order to prepare silica glass cheaply, two approaches are practiced; one is a sol-gel technology wherein a metal alkoxide is used as raw material, the other is a sol-gel technology wherein fumed silica is used as raw material. Each approach is described hereinafter.

The sol-gel process for economically preparing silica glass from metal alkoxides is studied by Nogami and Moriya, in Journal of Non-Crystalline Solids, 37, (1980) pp. 191-201.

The steps of this process are as follows; Silicon alkoxide, water, alcohol and proper catalyst such as hydrochloric acid or ammonia are mixed together and hydrolyzed. After gelling the hydrolyzed solution, the gel is dried to form dry gel. Dry gel is sinterred by increasing temperature and collapsed completely to form silica glass. According to this sol-gel process, silica glass allowed to be highly pure for an alkoxide used as raw material is easily purified. In addition, manufacturing cost is less expensive than the conventional process for heat treatment is carried out at low temperature.

On the contrary, this process suffers the deficiency that large articles of dry gel tend to crack during drying and similarly during heating in a process of conversion from dry gel to silica glass. Under the condition, the obtained silica glass is not sufficiently large to put into practical use. So far as known from references, a disc type silica glass of 28 mm diameter obtained by the study of Nogami and Moriya seems to be the largest at present.

On the other hand, the sol-gel process in which fumed silica is used as raw material is disclosed in Journal of Non-crystalline solids, 47, (1982) pp. 435-439 by E. M. Ravinovich et al. Fumed silica is mixed with water to be a hydrosol. After the hydrosol is gelled, the gel is dried to form dry gel, which is converted to silica glass by sintering. Being different from said metal alkoxide process, this sol-gel process using fumed silica has an advantage that the dry gel is hard to be broken or cracked during drying and sintering, which permits the formation of fairly large silica glass. Moreover, this sol-gel method is disadvantageous in that the bubbles are so easily generated that there is a lot of cells in a realized silica glass.

Therefore, this sol-gel process is unsuitable for an application requiring an optical uniformity.

As mentioned above, the conventional sol-gel process has not been enough sufficient to be applied in various field, since prepared silica glass thereby is not so large nor so good in quality.

DISCLOSURE OF INVENTION

The object of this invention is to provide an improved process for forming a silica glass plate of large size or a silica glass mass of large volume at low cost as compared to the conventional, with using a new sol-gel technology.

Another object of this invention is to provide an improved process for forming a silica glass of high quality.

A further object of this invention is to provide an improved process for forming a silica glass in good yield.

In the invention, a metal alkoxide is hydrolyzed to be sol solution. A fumed silica is added in the sol solution with stirring.

After the stirred solution is gelled, the gel is dried to be dry gel. A silica glass is formed by heating the dry gel until it becomes non-porous. A summary of the invention is described hereinafter.

Water and hydrochloric acid, and proper solvent if need be, are added into the silicon alkoxide and hydrolyzed to be sol.

The fumed silica Aerosil OX 50 G supplied by Degussa AG is added to the sol with well stirring. The sol is casted into the container of hydrophobic material such as polypropylene, polyvinylchloride, polyethylenefluorid (trademark: Teflon) and glass. The casted sol is gelled and dried to be dry gel. Dry gel is slowly heated from room temperature to a predetermined temperature where dry gel is kept until the pores therein are completely collapsed, in resulting to form a silica glass.

Nogami et al's research tells that the way for preventing the dry gel from cracking during sintering in the sol-gel technology using a metal alkoxide as raw material is to form a porous dry gel including a great quantity of large pores of about 50 to 100 Å in diameter.

This is also supposed by that E. M. Ravinovich et al's dry gel obtained by sol-gel technology using the fumed silica Aerosil OX 50 G as raw material is hard to crack during sintering, and that the dry gel synthesized by hydrolyzing a metal alkoxide with ammonia (which is rather porous than the dry gel materialized by hydrolyzing a metal alkoxide with acid) is hard to crack during sintering. Further, the research of the inventors proves that the hardness of uncrackable dry gel against an intensive shrinkage during drying is determined by the pH value of the sol solution.

Namely, the sol solution in which a metal alkoxide is hydrolyzed using an acid as catalyst indicates 1-2 pH value. As the pH value of the sol is higher, the synthesized dry gel is hard to crack, in resulting to be large dry gel.

In the light of the above, this invention has a feature that the fumed silica Aerosil OX 50 G is added into a sol solution including a hydrolyzed metal alkoxide. The advantages brought by addition of the fumed silica Aerosil OX 50 G is that a dry gel becomes so porous as to hardly crack during sintering, and that the pH value of the sol increases to about 2-3 so that the gelling speed is increased and the gel becomes hardly crackable during drying. Thus, this invention allows appearance of a large silica glass which has not been obtained by the conventional sol-gel method. In addition, the silica glass obtained by the forming process according to this invention has an optically good quality with remaining no cell therein during sintering.

The fumed silica Aerosil OX 50 G is a pyrogenically produced silica showing the following physical and chemical datas:

a) average Particlesize ($D_{50}$-Value) above $D_{50} \geq$ 150 nm (dynamic lightseattering, 30 weight-%)

b) Viscosity (5 RPM, 30 weight-%)

$$\eta \leq 100 \text{ m-Pas}$$

c) Thixotropy of $T_i \dfrac{\eta(5RPM)}{\eta(50RPM)} \leq 2$

d) BET-surface 30 to 60 m$^2$/g

e) Stampdensity SD = 100 to 160 g/l

f) Starting -pH-value $\leq 4,5$

Next, it will be described about the conditions of improving the yield of dry gel basing on the research of inventors. The container of hydrophobic material, where the gel is cast, is good for drying gel. This is because the dry gel shrinks to 70% of the original in length during drying, so that the gel must be easily slide in the container with weak affinity therebetween.

Organic polymer such as polypropylene, polyvinylchloride, polyethylenefluorid, polyethylene and polystyrene is suitable for a material of the container. The container of inorganic material whereon the organic material is coated has the same effect as the container of organic material.

With reference to drying condition, the evaporating speed of solvent in the gel such as water and alcohol is effective. The optimum drying condition must be set up in due consideration of the ratio of the area of the penetration holes in the lid of the container wherein the gel is cast to the total area of the lid (hereinafter referred to as the aperture rate), the drying temperature and the humidity.

Reduction in evaporating speed of the solvent in the gel with small evaporating rate contributes to make the gel uncrakable. However, as it takes many days to manufacture the dry gel, the manufacturing cost amounts to expensive. Consequently, it is desired to make yield good in short manufacturing time. Drying temperature influences the toughness of the gel. The higher the temperature is, the much tough gel is. As a result, good yield is taken. However, the temperature beyond boiling point of the solvent is so high that the evaporating speed can not be controlled. The maximum of the temperature is about 120 °C. Thus, it has been found in the experiment that the gel should be cast in the container with a lid of aperture rate less than 50%, preferably less than or equal to 10%, and dried at less than 120 °C.

Furthermore, the sol cast in the container should be gelled at as lower temperature as possible for the purpose of preventing generation of bubbles therein. Normally, bubbles are apt to generate in the sol or in the surface where the sol and the container are connected. However, the lower the gelation temperature is, the less the bubbles generate. When the temperature at this time (hereinafter referred to as gelling temperature) is beyond 60 °C, the bubbles generate in the almost all sol. After sintering, these bubbles remain in the silica glass and optical quality is deteriorated.

On the other hand, when the gelling temperature is too low, gelling speed drops and the manufacturing cost amounts to expensive. The minimum temperature is 5 °C to keep the practical gelling speed. The practical gelling temperature should be between 5 °C and 60 °C. After gelation is completed, a heating rate from gelling temperature to drying temperature should be low in order to obtain good yield, while it should be high in order to decrease the manufacturing time. The maximum temperature of heating rate is practically 120 °C/ h. A maximum dry gel of 12 cm diameter is obtained under the above mentioned conditions.

It is aforementioned that the pH value of the sol is increased from 1-2 to 2-3 by adding the fumed silica Aerosil OX 50 G, in resulting that the tough gel can be obtained which is uncrackable against the intensive shrinkage during drying. Therefore, a further large dry gel is obtained by increasing the pH value with addition of a base such as ammonia. As a result of the experiments, it is proved that the most tough and most uncrakable gel is obtained with pH value of 3-6. Thus, in a forming process of silica glass according to this invention, a further large silica glass can be obtained with adjustment of pH value of the sol.

The following materials are suitable for bases of adjusting pH value; ammonia, ammonia gas, a solution of ammonia or an organic base, especially triethylamine, a solution of triethylamine, pyridine or a solution of pyridine, aniline, or a solution of aniline. On the contrary, an inorganic base including metal alkaline ion such as sodium hydride and potassium hydride is unsuitable for forming a silica glass since cation remains in the silica glass whereby the composition of the silica glass is changed. The inorganic base is suitable for multi-component glasses such as a soda glass.

Next, conditions for sintering to obtain a silica glass of high quality in a good yield will be described hereinafter. Sintering comprises the following three processes;

    (1) process of removing the absorbed water
    (2) process of removing carbon
    (3) process of making gel non-porous

Process (1) has influence on the yield at sintering. Dry gel involves a large amount of physically absorbed water to be removed at 400 °C. At the heat treatment, abrupt rise of temperature for taking the absorbed water makes dry gel crackable easily, in resulting poor yield. Therefore, the heating rate should be low in order to make the yield good. While, the heating rate should be high in considering the manufacturing cost. The maximum of the heating rate is 400 °C/h so far as the yield is reasonable. Further, heat treatment should include at least one process of maintaining the gel for 1 hour or more at a predetermined temperature between 20 °C (a room temperature) and 400 °C. Process (2) is carried out at 400 °C -1100 °C. The heating rate during this heat treatment has an influence on the yield, even though not so much as process (1). The experiments by the inventors proves that appropriate heating rate is between 30 °C/h and 400 °C/h. Further, heat treatment should desirably include one process of maintaining the gel for 3 hours or more at a predetermined temperature between 400 °C and 1100 °C. At the time when the pH value is adjusted, basic-acid reaction matters remain in a dry gel. To be effective, this basic-acid reaction matters are decomposed during the process of removing carbon. It is desirable to lengthen the maintaining time in this case.

Process (3) is carried out at 1000 °C to 1400 °C, which is a little depending on the adding amount of fumed silica Aerosil OX 50 G. The most suitable heating rate from process (2) to process (3) is between 30 °C/h and 400 °C/h. A transparent silica glass having the same near infrared spectrum, Vickers hardness, a bulk density and the like as those of the silica glass on the market are formed by maintaining a dry gel for a predetermined time at a temperature where pores are collapsed. In this case, a dry gel is maintained for a long time at the temperature exceeding the above after pores are completel collapsed, bubbles are apt to generate. Generation of bubbles is due to the water remaining in a silica glass after collapsing pores. The less amount of water a silica glass includes, the less bubbles generate. Water content in a silica glass is a function of the adding amount of the fumed silica Aerosil OX 50 G. With increasing adding amount of the fumed silica OX 50 G, the involved water is so decreased that bubbles hardly generate. Therefore, a large amount of adding the fumed silica Aerosil OX 50 G is favorable for preventing generation of bubbles. On the contrary, the yield of dry gel at drying comes poor with a large amount of adding the fumed silica Aerosil OX 50 G. In order to hardly generate bubbles with good yield, the fumed silica Aerosil OX 50 G should be added so that the metal alkoxide and the fumed silica Aerosil OX 50 G may be in the ratio mol of 1:0.2-5.

On the other hand, there is a case where crystal such as cristobalite and tridymite is generated in a silica glass after sintering. This is a sort of devitrification. It has been found that a non-homogeneous dispersion of the fumed silica Aerosil OX 50 G in sol and/or a very small amount of impurities cause devitrification. To use the ultrasonic wave vibration and the centrifugal separation is effective for improving dispersion. Especially, small amount of impurities are removed by the centrifugal separation, whereby preventing occurrence of devitrification.

As described above, this invention can provide the large silica glass of about 15 x 15 cm which have been unprecedented by the conventional sol-gel method. Further, this invention can provide a silica glass in more than 90 % yield with much lower cost than the conventional.

Furthermore, a multicomponent glass such as borosilicate glass, soda glass, silica/alumina glass, alkali-proof glass of $SiO_2$ -$ZrO_2$ group, and low-expansion coefficient glass of $SiO_2$-$TiO_2$ group are allowed to be manufactured with low cost by applying this invention.

This invention is of great advantage to expansion of the demand of the silica glass in the field wherein the silica glass is applied. Furthermore, it is also of great advantage to expantion of new demand in the field wherein the silica glass has not been allowed to be applied due to the high cost.

BRIEF DESCRIPTION OF DRAWING

FIG. 1 illustrates the near infrared spectra of the silica glass obtained by the process in accordance with this invention and the silica glass obtained by the melting process on the market.

**Claims**

1. A process for forming a monolithic silica glass article, comprising:

   a) hydrolyzing a silicon alkoxide in solution to form a hydrolyzed solution;

   b) adding an effective amount of the fumed silica Aerosil OX 50 G, whereby the fumed silica Aerosil OX 50 G is a pyrogenically produced silica showing the following physical and chemical datas:

   i) average Particlesize ($D_{50}$-Value) above $D_{50} \geq 150$ nm (dynamic lightseattering, 30 weight-%)

   ii) Viscosity (5 RPM, 30 weight-%)

   $$\eta \leq 100 \text{ m-Pas}$$

   iii) Thixotropy of $T_i \dfrac{\eta(5 RPM)}{\eta(50 RPM)} \leq 2$

   iv) BET-surface 30 to 60 $m^2$/g

   v) Stampdensity SD = 100 to 160 g/l

   vi) Starting -pH-value $\leq 4{,}5$
   for preventing cracking during the process, which
   would provide cracks in the

   c) glass article, to the hydrolyzed solution to form a sol solution;

   d) gelling the sol solution to form a gel;

   e) drying the gel to form a dry gel; and

   f) sintering the dry gel at a temperature effective to form a glass thereby to form a large monolithic silica glass article without said cracking during the process.

2. The process of claim 1, wherein the fumed silica Aerosil OX 50 G is formed by hydrolyzing $SiCl_4$ with an oxy-hydrogen flame.

3. The process of claim 1, further including the step of uniformly dispersing the fumed silica Aerosil OX 50 G in the sol solution by ultrasonic vibration.

4. The process of claim 1, further including the step of dispersing the fumed silica Aerosil OX 50 G in the sol solution by centrifugal separation to insure uniform dispersion of fumed silica Aerosil OX 50 G.

5. The process of claim 1, wherein the silicon alkoxide is silicon ethoxide.

6. The process of claim 1, wherein the hydrolyzed silicon alkoxide is silicon ethoxide hydrolyzed with hydrochloric acid.

7. The process of claim 1, including the step of adjusting the pH of the sol solution to between about 3 and 6 by addition of a base.

8. The process of claim 1, wherein the pH of the sol solution is adjusted to between about 4 and 4.5 by addition of a base.

9. The process of claim 7, wherein the base is any one of ammonia and an organic base.

10. The process of claim 9, wherein the ammonia is selected from the group consisting of ammonia water, ammonia gas and an ammonia solution.

11. The process of claim 9, wherein the organic base is selected from the group of triethylamine, an aqueous solution of triethylamine, pyridine, an aqueous solution of pyridine, aniline or an aqueous aniline solution.

12. The process of claim 1, further including the step of drying the sol solution to a gel, and drying the gel to a dry gel in a mold having a lid covering the mold, said lid formed with aperatures comprising less than 50 % of the surface area of the lid.

13. The process of claim 7, wherein the sol solution is gelled in a mold having a lid covering the mold and formed with openings comprising less than about 20% of the surface area of the lid.

14. The process of claim 1, wherein the gel is formed at temperatures between about 5 °C and 60 °C and the gel is dried to a dry gel at a drying temperature between about 20 °C and 120 °C.

15. The process of claim 14, wherein the gel is heated to the drying temperature at a rate less than about 120 °C per hour.

16. The process of claim 1, wherein the sintering of the dry gel includes the steps of (a) removing absorbed water; (b) removing carbon and (c) making the dry gel non-porous.

17. The process of claim 16, including at least one heating step of removing absorbed water by heating the dry gel to a first selected temperature between about 20 °C and 400 °C at a heating rate of less than 400 °C per hour and maintaining the dried gel at the selected temperature for at least one hour.

18. The process of claim 17, including at least one heating step of removing carbon by heating the dry gel to a second selected temperature between about 400 °C and 1200 °C at a heating rate of between about 30 °C to 400 °C per hour and maintaining the second selected temperature for a period of more than at least 3 hours.

19. The process of claim 20, including at least one heating step of making the dry gel non-porous by heating the dry gel to a third selected temperature between about 1000 °C and 1400 °C at a heating rate of between about 30 °C and 400 °C per hour.

**European Patent Office**

**EUROPEAN SEARCH REPORT**

Application Number

EP 01 11 2262

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | US 4 681 615 A (TOKI MOTOYUKI ET AL) 21 July 1987 (1987-07-21) * column 2, line 28 - column 5, line 68; examples 4-6,8-16 * | 1-19 | C01B33/18 C03B8/02 |
| A | EP 1 074 513 A (DEGUSSA) 7 February 2001 (2001-02-07) * claims * | 1-19 | |
| A | EP 0 855 368 A (DEGUSSA) 29 July 1998 (1998-07-29) * claims * | 1-19 | |
| | | | **TECHNICAL FIELDS SEARCHED (Int.Cl.7)** |
| | | | C03C C01B |

The present search report has been drawn up for all claims

| Place of search | Date of completion of the search | Examiner |
|---|---|---|
| THE HAGUE | 3 October 2001 | Van Bommel, L |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

## ANNEX TO THE EUROPEAN SEARCH REPORT
## ON EUROPEAN PATENT APPLICATION NO.

EP 01 11 2262

This annex lists the patent family members relating to the patent documents cited in the above-mentioned European search report.
The members are as contained in the European Patent Office EDP file on
The European Patent Office is in no way liable for these particulars which are merely given for the purpose of information.

03-10-2001

| Patent document cited in search report | | | Publication date | Patent family member(s) | | | Publication date |
|---|---|---|---|---|---|---|---|
| US 4681615 | A | | 21-07-1987 | JP | 1024735 | B | 12-05-1989 |
| | | | | JP | 1542618 | C | 15-02-1990 |
| | | | | JP | 60065732 | A | 15-04-1985 |
| | | | | JP | 60065733 | A | 15-04-1985 |
| | | | | JP | 1573634 | C | 20-08-1990 |
| | | | | JP | 59116135 | A | 04-07-1984 |
| | | | | JP | 64000331 | B | 06-01-1989 |
| | | | | JP | 1833144 | C | 29-03-1994 |
| | | | | JP | 60131833 | A | 13-07-1985 |
| | | | | DE | 3390375 | C2 | 30-11-1989 |
| | | | | DE | 3390375 | T | 07-02-1985 |
| | | | | EP | 0131057 | A1 | 16-01-1985 |
| | | | | GB | 2140408 | A ,B | 28-11-1984 |
| | | | | HK | 69589 | A | 08-09-1989 |
| | | | | WO | 8402519 | A1 | 05-07-1984 |
| | | | | NL | 8320410 | A ,C | 01-11-1984 |
| | | | | NL | 8320410 | T | 01-11-1984 |
| | | | | SG | 39588 | G | 27-01-1989 |
| | | | | US | 4801318 | A | 31-01-1989 |
| EP 1074513 | A | | 07-02-2001 | DE | 19936478 | A1 | 15-02-2001 |
| | | | | EP | 1074513 | A2 | 07-02-2001 |
| | | | | JP | 2001072427 | A | 21-03-2001 |
| | | | | NO | 20003914 | A | 05-02-2001 |
| EP 0855368 | A | | 29-07-1998 | AU | 726460 | B2 | 09-11-2000 |
| | | | | AU | 5270098 | A | 30-07-1998 |
| | | | | CA | 2227709 | A1 | 23-07-1998 |
| | | | | DE | 19756840 | A1 | 30-07-1998 |
| | | | | EP | 0855368 | A1 | 29-07-1998 |
| | | | | JP | 10212118 | A | 11-08-1998 |
| | | | | US | 6063354 | A | 16-05-2000 |

For more details about this annex : see Official Journal of the European Patent Office, No. 12/82